# EUROPEAN PATENT APPLICATION

(11) **EP 3 051 387 A1**
(43) Date of publication of application: **03.08.2016**
(21) Application number: 13893982.2
(22) Date of filing: 23.09.2013
(51) Int. Cl.: G06F 3/023

(54) **ASSOCIATED PROMPT INPUT METHOD, SYSTEM AND TERMINAL**

(71) Applicant: Yulong Computer Telecommunication Scientific (Shenzhen) Co. Ltd., Shenzhen, Guangdong 518057 (CN)
(72) Inventor: XU, Yishan, Shenzhen Guangdong 518057 (CN)
(74) Representative: Johnson, Richard Alan
(86) International application number: PCT/CN2013/084030
(87) International publication number: WO 2015/039353

(57) **Abstract**

The present invention provides an associated prompt input method, an associated prompt input system, and a terminal. Wherein, the associated prompt input method comprises step 102, inquiring one or more priority associated characters and one or more non-priority associated characters which are associated with an input character when receiving the input character, and step 104, displaying the one or more priority associated characters in a preset mode when finding the one or more priority associated characters, and causing the non-priority associated characters and the one or more priority associated characters displayed by the preset mode to be prompt input items of the input character. By means of the technical solution of the present application, convenience for displaying contact names as the prompt input items based on the input character can be ensured, and also it can be ensured that a user can easily select the system default prompt input character to finish input, accordingly the accuracy of the character association is increased.

## Description

### FIELD OF THE TECHNICAL

The present invention relates to input method technology field, and particularly to an associated prompt input method, an associated prompt input system, and a terminal.

### BACKGROUND

The present input methods usually have contact person association function. That is, when the family name of a contact person or the full pinyin of a contact name is entered, a corresponding name is displayed in a prompt input column to conveniently and quickly input the contact name.

However, this method has a shortcoming. When in a mobile phone there are a great number of contact persons having a same family name, this name association method based on an input family name can affect the display of system default candidate characters. For example, when the Chinese character " 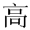 " is entered, associated prompt input may have " 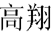 ", " 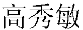 ", " 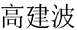 ", " 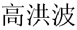 ", and so on. As personal names, e.g., contact names extracted from an address book, or priority associated words generated by the system based on recorded character input habits of a user, are user created words, this kind of words are priority associated words for an input method engine when the input method engine executes an association operation based on the user input. Thus, a great number of personal names are arranged in front of the prompt input column. After displaying these, the system default prompt input characters, e.g., the Chinese characters " 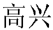 ", " 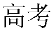 ", " 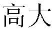 ", and so on, are then displayed. Under this condition, the use of the system default words can be affected. If the character what is actually needed by the user is one system default prompt input character, the user needs to perform repeat flipping operations to find the needed character, which reduces the accuracy of character association of the input method.

### SUMMARY

Based on the above problem, the present invention provides an associated prompt input method. By means of the technical solution of the present invention, when the user types a character, not only created words having high priorities and associated with the input character (e.g., contact names) can be displayed, but also the condition of that the system default prompt input characters cannot be displayed on the first page of a prompt input column as there are a great number of priority associated words (e.g., contact persons) can be eliminated. On one hand convenience for displaying contact names as the prompt input items based on the input character can be ensured, on the other hand it can be ensured that the user can easily select the system default prompt input character to finish input, accordingly the accuracy of the character association is increased.

The present invention provides an associated prompt input method which includes step 102, inquiring one or more priority associated characters and one or more non-priority associated characters which are associated with an input character when receiving the input character, and step 104, displaying the one or more priority associated characters in a preset mode when finding the one or more priority associated characters, and causing the one or more non-priority associated characters and the one or more priority associated characters displayed in the preset mode to be prompt input items of the input character.

In the technical solution, when a user types a character, a query operation can be performed according to the input character. The found prompt input characters can include two kinds. One kind are default prompt input characters of the input method which are associated with the input character (that is, the non-priority associated characters). The other kind are the prompt input characters which are obtained by inquiring an address book of a user terminal or by inquiring a user created database (that is, the priority associated characters), and the priorities of the characters found by this way are higher than that of the system default associated characters. The priority associated characters are displayed in the preset mode. For example, only the abbreviation of the priority associated character is displayed, or the same information of a number of priority associated characters is displayed, or among the number of priority associated characters only the character having high priority is displayed. Thus, the space of the prompt input column which is taken up by the priority associated characters can be reduced, which can eliminate the condition that the default prompt input items cannot be displayed on the first page of the prompt input column. On one hand convenience for displaying contact names as the prompt input items based on the input character can be ensured, on the other hand it can be ensured that the user can easily select the system default prompt input character to finish input, accordingly the accuracy of the character association is increased, and user's experience is improved.

In the above technical solution, preferably, the preset mode can include generating an identifier according to the one or more priority associated characters, and displaying the identifier.

In the technical solution, the identifier can be generated according to the one or more priority associated characters. For example, if the priority associated character is a contact name the length of which is long, the family name of the contact person can be displayed as the identifier. If the priority associated character is a place name the length of which is long, e.g., if the priority associated character is the United States of America, USA which is the abbreviation of the place name can be displayed as the identifier. If there are a number of priority associated characters, for example, if the priority associated characters include a number of contact names having a same family name and different given names, the family name of the contact persons can be displayed as the identifier. For example, if the priority associated characters are a number of contact names, among the plurality of contact names the contact name having the highest priority can be displayed as the identifier, thus the priority associated characters does not take up a great space of the prompt input column, and it can be ensured that the system default associated characters can be displayed on the first page of the prompt input column.

In the technical solution, preferably, step 104 further includes displaying the identifier and the one or more non-priority associated characters as the prompt input items according to a preset priority.

In the technical solution, after generating the identifier, as the priorities of the priority associated characters are higher than that of the non-priority associated characters, the generated identifier can be displayed in front of all the non-priority associated characters. Certainly, the user can also set the display priority by himself/herself, so as to cause the identifier to be displayed in the second or third place of the prompt input column, accordingly it is facilitate the user to set display effect according to needs.

In the above technical solution, preferably, step 104 further includes determining whether or not the number of the one or more priority associated characters reaches a preset value. If the number of the one or more priority associated characters reaches the preset value, the preset mode includes generating the identifier according to preset attribute information of each of the one or more priority associated characters. If the number of the one or more priority associated characters does not reach the preset value, the preset mode includes taking each of the one or more priority associated characters as the identifier.

In the technical solution, if the number of the priority associated characters is greater than the preset value, e.g., the preset value is one, when there are a number of priority associated characters, the priority associated characters can be displayed via the identifier. The preset attribute information can be the priority of each character (e.g., if the priority associated characters are a number of contact names, among the plurality of contact names the contact name having the highest priority can be displayed as the identifier), the same character of the plurality of priority associated characters (e.g., if the priority associated characters include a number of contact names having a same family name and different given names, the family name of the contact persons can be displayed as the identifier), the abbreviation of the priority associated characters (e.g., if the priority associated character is the United States of America, USA which is the abbreviation of the place name can be displayed as the identifier), or the like. Thus the priority associated characters does not take up a great space of the prompt input column, and it can be ensured that the system default associated characters can be displayed on the first page of the prompt input column. When the number of the priority associated character is one, the priority associated character can be directly displayed as the identifier. Certainly, the user can set the preset value according to needs. For example, the preset value can be set to three. Under any of the above conditions, only when the number of the found contact names is greater than three, the family name of the plurality of contact persons can be displayed as the identifier, otherwise, each contact name is directly displayed as the identifier.

In the technical solution, preferably, the method further includes showing each of the one or more priority associated characters in the preset mode when receiving a first preset operation exerted on the identifier under the condition of that the number of the one or more priority associated characters reaches the preset value.

In the technical solution, when the identifier is used to indicate a number of priority associated characters (it is assumed that the preset value is one), the identifier can be operated, for example, can be clicked so as to display the plurality of priority associated characters corresponding to the identifier. Accordingly, it can be ensured that the plurality of priority associated characters can be displayed in the prompt input column in abbreviation way, and the user can quickly select a needed character from the plurality of priority associated characters by performing a simple operation to finish input. On one hand convenience for displaying contact names as the prompt input items based on the input character can be ensured, on the other hand it can be ensured that the user can easily select the system default prompt input character to finish input, accordingly the accuracy of the character association is increased.

In the technical solution, preferably, the method further includes extracting the character having the highest priority from the priority associated characters when receiving a second preset operation exerted on the identifier under the condition of that the number of the priority associated characters reaches the preset value.

In the technical solution, when the identifier is used to indicate a number of priority associated characters (it is assumed that the preset value is one), the identifier can be operated so as to directly extract the character having the high priority from the plurality of priority associated characters, thereby input can be quickly finished.

In any of the above technical solution, preferably, step 102 further includes determining whether or not there are one or more priority associated characters. If yes, the procedure goes to step 104, otherwise the one or more non-priority associated characters are displayed as the prompt input items.

In the technical solution, when no priority associated character is found, only the non-priority characters are displayed, that is, only the system default characters which are associated with the input character are displayed.

In the technical solution, preferably, step 104 further includes determining whether or not the number of the one or more priority associated characters reaches the preset value. If the number of the one or more priority associated characters does not reach the preset value, the preset mode includes taking each of the one or more priority associated characters as the identifier. If the number of the priority associated characters reach the preset value, the preset mode includes obtaining a preset number of characters from the priority associated characters according to the priority of each of the priority associated characters and taking the preset number of characters as the identifier.

In the technical solution, for the priority associated characters, the user can preset a threshhold for determining display number, such as two. Thus, under the condition of that there are a great number of found priority associated characters, only two characters the priorities of which are higher than that of the remaining found priority associated characters are displayed in the prompt input column, which can cause a proper number of the system default associated prompt characters to be displayed on the first page of the prompt input column according to user's setting, and can eliminate the condition that the system default prompt input characters cannot be displayed on the first page of the prompt input column as there are a great number of priority associated words, e.g., contact persons.

In any of the above technical solutions, preferably, the method further includes storing an added character as one priority associated character according to a character adding operation, and/or generating one priority associated character according to an extraction operation exerted on a plurality of characters and storing the priority associated character.

In the technical solution, the priority associated characters can be set according to the adding operation performed by the user. For example, the contact names of the address book can be set to be the priority associated characters for the input method to execute priority association operation. According to recorded input habits of the user, priority associated characters can also be generated by performing an extracting operation on the input characters.

The present application further provides an associated prompt input system which includes an inquiring unit configured to inquire one or more priority associated characters and one or more non-priority associated characters which are associated with an input character when receiving the input character, and a displaying unit configured to display the one or more priority associated characters in a preset mode when finding the one or more priority associated characters, and cause the one or more non-priority associated characters and the one or more priority associated characters displayed in the preset mode to be prompt input items of the input character.

In the technical solution, when a user types a character, a query operation can be performed according to the input character. The found prompt input characters can include two kinds. One kind are default prompt input characters of the input method which are associated with the input character (that is, the non-priority associated characters). The other kind are the prompt input characters which are obtained by inquiring an address book of a user terminal or by inquiring a user created database (that is, the priority associated characters), and the priorities of the characters found by this way are higher than that of the system default associated characters. The priority associated characters are displayed in the preset mode. For example, only the abbreviation of the priority associated character is displayed, or the same information of a number of priority associated characters is displayed, or among the number of priority associated characters only the character having high priority is displayed. Thus, the space of the prompt input column which is taken up by the priority associated characters can be reduced, which can eliminate the condition that the default prompt input items cannot be displayed on the first page of the prompt input column. On one hand convenience for displaying contact names as the prompt input items based on the input character can be ensured, on the other hand it can be ensured that the user can easily select the system default prompt input character to finish input, accordingly the accuracy of the character association is increased, and user's experience is improved.

In the technical solution, preferably, the system further includes an identifier generating unit configured to generate an identifier according to the one or more priority associated characters. Wherein, the displaying unit is configured to display the identifier.

In the technical solution, the identifier can be generated according to the one or more priority associated characters. For example, if the priority associated character is a contact name the length of which is long, the family name of the contact person can be displayed as the identifier. If the priority associated character is a place name the length of which is long, e.g., if the priority associated character is the United States of America, USA which is the abbreviation of the place name can be displayed as the identifier. If there are a number of priority associated characters, for example, if the priority associated characters include a number of contact names having a same family name and different given names, the family name of the contact persons can be displayed as the identifier. For example, if the priority associated characters are a number of contact names, among the plurality of contact names the contact name having the highest priority can be displayed as the identifier, thus the priority associated characters does not take up a great space of the prompt input column, and it can be ensured that the system default associated characters can be displayed on the first page of the prompt input column.

In the technical solution, preferably, the displaying unit is further configured to display the identifier and the one or more non-priority associated characters as the prompt input items according to a preset priority.

In the technical solution, after generating the identifier, as the priorities of the priority associated characters are higher than that of the non-priority associated characters, the generated identifier can be displayed in front of all the non-priority associated characters. Certainly, the user can also set the display priority by himself/herself, so as to cause the identifier to be displayed in the second or third place of the prompt input column, accordingly it is facilitate the user to set display effect according to needs.

In the technical solution, preferably, the system further includes a determining unit configured to determine whether or not the number of the one or more priority associated characters reaches a preset value. Wherein, when the determining unit determines that the number of the one or more priority associated characters reaches the preset value, the preset mode includes the identifier generating unit generates the identifier according to preset attribute information of each of the one or more priority associated characters. When the determining unit determines that the number of the one or more priority associated characters does not reach the preset value, the preset mode includes the identifier generating unit takes each of the one or more priority associated characters as the identifier.

In the technical solution, if the number of the priority associated characters is greater than the preset value, e.g., the preset value is one, when there are a number of priority associated characters, the priority associated characters can be displayed via the identifier. The preset attribute information can be the priority of each character (e.g., if the priority associated characters are a number of contact names, among the plurality of contact names the contact name having the highest priority can be displayed as the identifier), the same character of the plurality of priority associated characters (e.g., if the priority associated characters include a number of contact names having a same family name and different given names, the family name of the contact persons can be displayed as the identifier), the abbreviation of the priority associated characters (e.g., if the priority associated character is the United States of America, USA which is the abbreviation of the place name can be displayed as the identifier), or the like. Thus the priority associated characters does not take up a great space of the prompt input column, and it can be ensured that the system default associated characters can be displayed on the first page of the prompt input column. When the number of the priority associated character is one, the priority associated character can be directly displayed as the identifier. Certainly, the user can set the preset value according to needs. For example, the preset value can be set to three. Under any of the above conditions, only when the number of the found contact names is greater than three, the family name of the plurality of contact persons can be displayed as the identifier, otherwise, each contact name is directly displayed as the identifier.

In the above technical solution, preferably, when the determining unit determines that the number of the one or more priority associated characters reaches the preset value, the displaying unit shows each of the one or more priority associated characters in the preset mode when receiving a first preset operation exerted on the identifier.

In the technical solution, when the identifier is used to indicate a number of priority associated characters (it is assumed that the preset value is one), the identifier can be operated, for example, can be clicked so as to display the plurality of priority associated characters corresponding to the identifier. Accordingly, it can be ensured that the plurality of priority associated characters can be displayed in the prompt input column in abbreviation way, and the user can quickly select a needed character from the plurality of priority associated characters by performing a simple operation to finish input. On one hand convenience for displaying contact names as the prompt input items based on the input character can be ensured, on the other hand it can be ensured that the user can easily select the system default prompt input character to finish input, accordingly the accuracy of the character association is increased.

In the above technical solution, preferably, the system further includes an extracting unit configured to extract the character having the highest priority from the priority associated characters when receiving a second preset operation exerted on the identifier when the determining unit determines that the number of the priority associated characters reaches the preset value.

In the technical solution, when the identifier is used to indicate a number of priority associated characters (it is assumed that the preset value is one), the identifier can be operated so as to directly extract the character having the high priority from the plurality of priority associated characters, thereby input can be quickly finished.

In any of the above technical solutions, preferably, the inquiring unit is further configured to determine whether or not there is one or more priority associated characters. When the inquiring unit determines that there is one or more priority associated characters, the displaying unit displays the one or more priority associated characters in the preset mode. When the inquiring unit determines that there is no priority associated character, the displaying unit displays the non-priority associated characters as the prompt input items.

In the technical solution, when no priority associated character is found, only the non-priority characters are displayed, that is, only the system default characters which are associated with the input character are displayed.

In the above technical solution, preferably, the determining unit is further configured to determine whether or not the number of the one or more priority associated characters reaches the preset value. Wherein, when the determining unit determines that the number of the one or more priority associated characters does not reach the preset value, the preset mode includes that the identifier generating unit takes each of the one or more priority associated characters as the identifier. When the determining unit determines that the number of the priority associated characters reaches the preset value, the preset mode includes that the identifier generating unit obtains a preset number of characters from the priority associated characters according to the priority of each of the priority associated characters and takes the preset number of characters as the identifier.

In the technical solution, for the priority associated characters, the user can preset a threshhold for determining display number, such as two. Thus, under the condition of that there are more found priority associated characters, only two characters the priorities of which are higher than that of the remaining found priority associated characters are displayed in the prompt input column, which can cause a proper number of the system default associated prompt characters to be displayed on the first page of the prompt input column according to user's setting, and can eliminate the condition that the system default prompt input characters cannot be displayed on the first page of the prompt input column as there are a great number of priority associated words, e.g., contact persons.

In any of the above technical solutions, preferably, the system further includes a character adding unit configured to store an added character as one priority associated character according to a character adding operation, and/or generate one priority associated character according to an extraction operation exerted on a plurality of characters and store the priority associated character.

In the technical solution, the priority associated characters can be set according to the adding operation performed by the user. For example, the contact names of the address book can be set to be the priority associated characters for the input method to execute priority association operation. According to recorded input habits of the user, priority associated characters can also be generated by performing an extracting operation on the input characters.

The present application further includes a terminal which includes the associated prompt input system described in above.

According to embodiments of the present invention, the present invention further provides a program product stored in a non-volatile machine readable medium to execute an associated prompt input process. The program product includes machine executable instructions executed by the computer system to realize the following steps: inquiring one or more priority associated characters and one or more non-priority associated characters which are associated with an input character when receiving the input character; and displaying the one or more priority associated characters in a preset mode when finding one or more priority associated characters, and causing the one or more non-priority associated characters and the one or more priority associated characters displayed by the preset mode to be prompt input items of the input character.

According to embodiments of the present invention, the present invention further provides a non-volatile machine readable medium storing a program product for executing an associated prompt input process. The program product includes machine executable instructions executed by the computer system to realize the following steps: inquiring one or more priority associated characters and one or more non-priority associated characters which are associated with an input character when receiving the input character; and displaying the one or more priority associated characters in a preset mode when finding one or more priority associated characters, and causing the one or more non-priority associated characters and the one or more priority associated characters displayed by the preset mode to be prompt input items of the input character.

According to embodiments of the present invention, the present invention further provides a machine-readable program configured to enable the machine to execute any of the associated prompt input methods described in the above technical solutions.

According to embodiments of the present invention, the present invention further provides a storage medium storing a machine readable program. Wherein, the machine-readable program is configured to enable the machine to execute any of the associated prompt input methods described in the above technical solutions.

By means of the technical solution of the present invention, when the user types a character, not only the created words having high priorities and associated with the input character (e.g., contact names) can be displayed, but also the condition of that the system default prompt input characters cannot be displayed on the first page of the prompt input column as there are a great number of priority associated words (e.g., contact persons) can be eliminated. On one hand convenience for displaying contact names as the prompt input items based on the input character can be ensured, on the other hand it can be ensured that the user can easily select the system default prompt input character to finish input, accordingly the accuracy of the character association is increased.

### BRIEF DESCRIPTION OF THE DRAWINGS

FIG. 1 is a schematic flow chart of an associated prompt input method in accordance with an exemplary embodiment of the present invention.
FIG. 2 is a schematic block diagram of an associated prompt input system in accordance with an exemplary embodiment of the present invention.
FIG. 3 shows a schematic logic diagram of associated prompt input in accordance with an exemplary embodiment of the present invention.
FIGs. 4A-4G show schematic views of associated prompt input in accordance with an exemplary embodiment of the present invention.

### DETAILED DESCRIPTION OF ILLUSTRATED EMBODIMENTS

To understand the above-mentioned purposes, features and advantages of the present disclosure more clearly, the present disclosure will be further described in detail below in combination with the accompanying drawings and the specific implementations. It should be noted that, the embodiments of the present application and the features in the embodiments may be combined with one another without conflicts.

Many specific details will be described below for sufficiently understanding the present disclosure. However, the present disclosure may also be implemented by adopting other manners different from those described herein. Accordingly, the protection scope of the present invention is not limited by the specific embodiments disclosed below.

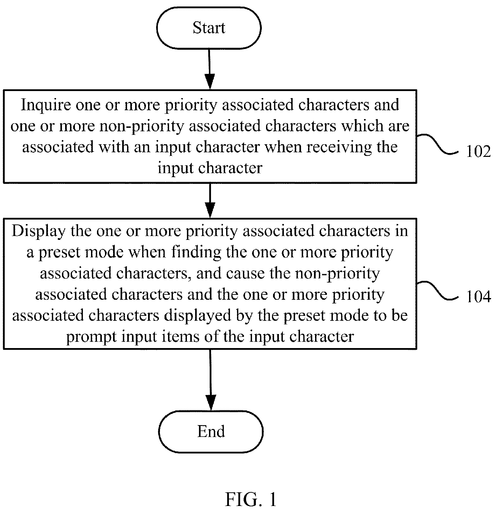

FIG. 1 shows a schematic flow chart of an associated prompt input method in accordance with an exemplary embodiment of the present invention.

As shown in FIG. 1, an associated prompt input method includes step 102, inquiring one or more priority associated characters and one or more non-priority associated characters which are associated with an input character when receiving the input character, and step 104, displaying the one or more priority associated characters in a preset mode when finding the one or more priority associated characters, and causing the one or more non-priority associated characters and the one or more priority associated characters displayed in the preset mode to be prompt input items of the input character.

When a user types a character, a query operation can be performed according to the input character. The found prompt input characters can include two kinds. One kind are default prompt input characters of the input method which are associated with the input character (that is, the non-priority associated characters). The other kind are the prompt input characters which are obtained by inquiring an address book of a user terminal or by inquiring a user created database (that is, the priority associated characters), and the priorities of the characters found by this way are higher than that of the system default associated characters. The priority associated characters are displayed in the preset mode. For example, only the abbreviation of the priority associated character is displayed, or the same information of a number of priority associated characters is displayed, or among the number of priority associated characters only the character having high priority is displayed. Thus, the space of the prompt input column which is taken up by the priority associated characters can be reduced, which can eliminate the condition that the default prompt input items cannot be displayed on the first page of the prompt input column. On one hand convenience for displaying contact names as the prompt input items based on the input character can be ensured, on the other hand it can be ensured that the user can easily select the system default prompt input character to finish input, accordingly the accuracy of the character association is increased, and user's experience is improved.

Preferably, the preset mode can include generating an identifier according to the one or more priority associated characters, and displaying the identifier.

The identifier can be generated according to the one or more priority associated characters. For example, if the priority associated character is a contact name the length of which is long, the family name of the contact person can be displayed as the identifier. If the priority associated character is a place name the length of which is long, e.g., if the priority associated character is the United States of America, USA which is the abbreviation of the place name can be displayed as the identifier. If there are a number of priority associated characters, for example, if the priority associated characters include a number of contact names having a same family name and different given names, the family name of the contact persons can be displayed as the identifier. For example, if the priority associated characters are a number of contact names, among the plurality of contact names the contact name having the highest priority can be displayed as the identifier, thus the priority associated characters does not take up a great space of the prompt input column, and it can be ensured that the system default associated characters can be displayed on the first page of the prompt input column.

Preferably, step 104 further includes displaying the identifier and the one or more non-priority associated characters as the prompt input items according to a preset priority.

After generating the identifier, as the priorities of the priority associated characters are higher than that of the non-priority associated characters, the generated identifier can be displayed in front of all the non-priority associated characters. Certainly, the user can also set the display priority by himself/herself, so as to cause the identifier to be displayed in the second or third place of the prompt input column, accordingly it is facilitate the user to set display effect according to needs.

Preferably, step 104 further includes determining whether or not the number of the one or more priority associated characters reaches a preset value. If the number of the one or more priority associated characters reaches the preset value, the preset mode includes generating the identifier according to preset attribute information of each of the one or more priority associated characters. If the number of the one or more priority associated characters does not reach the preset value, the preset mode includes taking each of the one or more priority associated characters as the identifier.

If the number of the priority associated characters is greater than the preset value, e.g., the preset value is one, when there are a number of priority associated characters, the priority associated characters can be displayed via the identifier. The preset attribute information can be the priority of each character (e.g., if the priority associated characters are a number of contact names, among the plurality of contact names the contact name having the highest priority can be displayed as the identifier), the same character of the plurality of priority associated characters (e.g., if the priority associated characters include a number of contact names having a same family name and different given names, the family name of the contact persons can be displayed as the identifier), the abbreviation of the priority associated characters (e.g., if the priority associated character is the United States of America, USA which is the abbreviation of the place name can be displayed as the identifier), or the like. Thus the priority associated characters does not take up a great space of the prompt input column, and it can be ensured that the system default associated characters can be displayed on the first page of the prompt input column. When the number of the priority associated character is one, the priority associated character can be directly displayed as the identifier. Certainly, the user can set the preset value according to needs. For example, the preset value can be set to three. Under any of the above conditions, only when the number of the found contact names is greater than three, the family name of the plurality of contact persons can be displayed as the identifier, otherwise, each contact name is directly displayed as the identifier.

The identifier can be displayed in a manner different from the display of the non-priority associated characters. For example, in the above embodiments, if the priority associated character is one contact name (at this point the preset value is zero, and when the priority associated character is found, the identifier can be generated according to the priority associated character), and the length of the contact name is long, the generated identifier can include the family name of the contact person. If the family name of the contact person is the Chinese character " 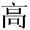 " , the identifier generated based on the priority associated character can be " 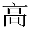 ..", the apostrophe is used to indicate that there are other characters after the Chinese character " 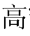 ", and the identifier " 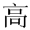 ..." is just only the abbreviation representation of the plurality of characters. For another example, in the above embodiments, if the priority associated characters include a number of contact names having a same family name and different given names, the family name of the contact persons is displayed as the identifier. The identifier can be shown as " 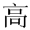 ...▼" , and the symbol "▼" is used to prompt the user that when the identifier is clicked, a drop-down menu is generated to show a number of contact names. Certainly, the plurality of contact names can be shown in other manners, for example, shown via a floating window, a list, or the like.

Preferably, the priority associated characters can be user-defined characters or intelligently selected characters, for example, user created characters or characters having high priorities in an order. Preferably, in the candidate character column the display of the priority associated characters is different from that of the non-priority associated characters, for example one kind arranged in parallel, and the other kind arranged vertically, or both arranged in other methods for differentiation.

Preferably, the method further includes showing each of the one or more priority associated characters in the preset mode when receiving a first preset operation exerted on the identifier under the condition of that the number of the one or more priority associated characters reaches the preset value.

When the identifier is used to indicate a number of priority associated characters (it is assumed that the preset value is one), the identifier can be operated, for example, can be clicked so as to display the plurality of priority associated characters corresponding to the identifier. For example, a drop-down menu, a floating window, or a list can be used to show each priority associated character. Accordingly, it can be ensured that the plurality of priority associated characters can be displayed in the prompt input column in abbreviation way, and the user can quickly select a needed character from the plurality of priority associated characters by performing a simple operation to finish input. On one hand convenience for displaying contact names as the prompt input items based on the input character can be ensured, on the other hand it can be ensured that the user can easily select the system default prompt input character to finish input, accordingly the accuracy of the character association is increased.

Preferably, the method further includes extracting the character having the highest priority from the priority associated characters when receiving a second preset operation exerted on the identifier under the condition of that the number of the priority associated characters reaches the preset value.

When the identifier is used to indicate a number of priority associated characters (it is assumed that the preset value is one), the identifier can be operated so as to directly extract the character having the high priority from the plurality of priority associated characters, thereby input can be quickly finished.

Preferably, step 102 further includes determining whether or not there are one or more priority associated characters. If yes, the procedure goes to step 104, otherwise the one or more non-priority associated characters are displayed as the prompt input items.

When no priority associated character is found, only the non-priority characters are displayed, that is, only the system default characters which are associated with the input character are displayed.

Preferably, step 104 further includes determining whether or not the number of the one or more priority associated characters reaches the preset value. If the number of the one or more priority associated characters does not reach the preset value, the preset mode includes taking each of the one or more priority associated characters as the identifier. If the number of the priority associated characters reach the preset value, the preset mode includes obtaining a preset number of characters from the priority associated characters according to the priority of each of the priority associated characters and taking the preset number of characters as the identifier.

For the priority associated characters, the user can preset a threshhold for determining display number, such as two. Thus, under the condition of that there are a great number of found priority associated characters, only two characters the priorities of which are higher than that of the remaining found priority associated characters are displayed in the prompt input column, which can cause a proper number of the system default associated prompt characters to be displayed on the first page of the prompt input column according to user's setting, and can eliminate the condition that the system default prompt input characters cannot be displayed on the first page of the prompt input column as there are more priority associated words, e.g., contact persons.

Preferably, the method further includes storing an added character as one priority associated character according to a character adding operation, and/or generating one priority associated character according to an extraction operation exerted on a plurality of characters and storing the priority associated character.

The priority associated characters can be set according to the adding operation performed by the user. For example, the contact names of the address book can be set to be the priority associated characters for the input method to execute priority association operation. According to recorded input habits of the user, priority associated characters can also be generated by performing an extracting operation on the input characters.

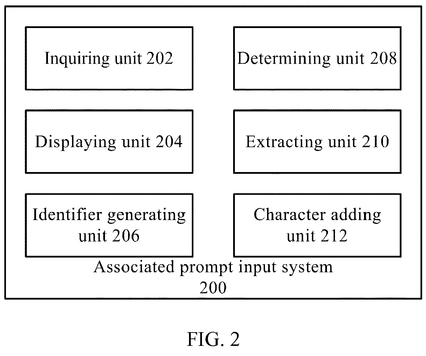

FIG. 2 is a schematic block diagram of an associated prompt input system in accordance with an exemplary embodiment of the present invention.

As shown in FIG.2, an associated prompt input system 200 in accordance with an exemplary embodiment of the present invention includes an inquiring unit 202 configured to inquire one or more priority associated characters and one or more non-priority associated characters which are associated with an input character when receiving the input character, and a displaying unit 204 configured to display the one or more priority associated characters in a preset mode when finding the one or more priority associated characters, and cause the one or more non-priority associated characters and the one or more priority associated characters displayed in the preset mode to be prompt input items of the input character.

When a user types a character, a query operation can be performed according to the input character. The found prompt input characters can include two kinds. One kind are default prompt input characters of the input method which are associated with the input character (that is, the non-priority associated characters). The other kind are the prompt input characters which are obtained by inquiring an address book of a user terminal or by inquiring a user created database (that is, the priority associated characters), and the priorities of the characters found by this way are higher than that of the system default associated characters. The priority associated characters are displayed in the preset mode. For example, only the abbreviation of the priority associated character is displayed, or the same information of a number of priority associated characters is displayed, or among the number of priority associated characters only the character having high priority is displayed. Thus, the space of the prompt input column which is taken up by the priority associated characters can be reduced, which can eliminate the condition that the default prompt input items cannot be displayed on the first page of the prompt input column. On one hand convenience for displaying contact names as the prompt input items based on the input character can be ensured, on the other hand it can be ensured that the user can easily select the system default prompt input character to finish input, accordingly the accuracy of the character association is increased, and user's experience is improved.

Preferably, the system 200 further includes an identifier generating unit 206 configured to generate an identifier according to the one or more priority associated characters. Wherein, the displaying unit is configured to display the identifier.

The identifier can be generated according to the one or more priority associated characters. For example, if the priority associated character is a contact name the length of which is long, the family name of the contact person can be displayed as the identifier. If the priority associated character is a place name the length of which is long, e.g., if the priority associated character is the United States of America, USA which is the abbreviation of the place name can be displayed as the identifier. If there are a number of priority associated characters, for example, if the priority associated characters include a number of contact names having a same family name and different given names, the family name of the contact persons can be displayed as the identifier. For example, if the priority associated characters are a number of contact names, among the plurality of contact names the contact name having the highest priority can be displayed as the identifier, thus the priority associated characters does not take up a great space of the prompt input column, and it can be ensured that the system default associated characters can be displayed on the first page of the prompt input column.

Preferably, the displaying unit 204 is further configured to display the identifier and the one or more non-priority associated characters as the prompt input items according to a preset priority.

After generating the identifier, as the priorities of the priority associated characters are higher than that of the non-priority associated characters, the generated identifier can be displayed in front of all the non-priority associated characters. Certainly, the user can also set the display priority by himself/herself, so as to cause the identifier to be displayed in the second or third place of the prompt input column, accordingly it is facilitate the user to set display effect according to needs.

Preferably, the system 200 further includes a determining unit 208 configured to determine whether or not the number of the one or more priority associated characters reaches a preset value. Wherein, when the determining unit 208 determines that the number of the one or more priority associated characters reaches the preset value, the preset mode includes the identifier generating unit 206 generates the identifier according to preset attribute information of each of the one or more priority associated characters. When the determining unit 208 determines that the number of the one or more priority associated characters does not reach the preset value, the preset mode includes the identifier generating unit 206 takes each of the one or more priority associated characters as the identifier.

If the number of the priority associated characters is greater than the preset value, e.g., the preset value is one, when there are a number of priority associated characters, the priority associated characters can be displayed via the identifier. The preset attribute information can be the priority of each character (e.g., if the priority associated characters are a number of contact names, among the plurality of contact names the contact name having the highest priority can be displayed as the identifier), the same character of the plurality of priority associated characters (e.g., if the priority associated characters include a number of contact names having a same family name and different given names, the family name of the contact persons can be displayed as the identifier), the abbreviation of the priority associated characters (e.g., if the priority associated character is the United States of America, USA which is the abbreviation of the place name can be displayed as the identifier), or the like. Thus the priority associated characters does not take up a great space of the prompt input column, and it can be ensured that the system default associated characters can be displayed on the first page of the prompt input column. When the number of the priority associated character is one, the priority associated character can be directly displayed as the identifier. Certainly, the user can set the preset value according to needs. For example, the preset value can be set to three. Under any of the above conditions, only when the number of the found contact names is greater than three, the family name of the plurality of contact persons can be displayed as the identifier, otherwise, each contact name is directly displayed as the identifier.

The identifier can be displayed in a manner different from the display of the non-priority associated characters. For example, in the above embodiments, if the priority associated character is one contact name (at this point the preset value is zero, and when the priority associated character is found, the identifier can be generated according to the priority associated character), and the length of the contact name is long, the generated identifier can include the family name of the contact person. If the family name of the contact person is the Chinese character " 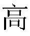 ", the identifier generated based on the priority associated character can be " 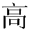 ..", the apostrophe is used to indicate that there are other characters after the Chinese character " 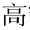 ", and the identifier " 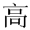 ..." is just only the abbreviation representation of the plurality of characters. For another example, in the above embodiments, if the priority associated characters include a number of contact names having a same family name and different given names, the family name of the contact persons is displayed as the identifier. The identifier can be shown as " 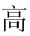 ...▼" , and the symbol "▼" is used to prompt the user that when the identifier is clicked, a drop-down menu is generated to show a number of contact names. Certainly, the plurality of contact names can be shown in other manners, for example, shown via a floating window, a list, or the like.

Preferably, the priority associated characters can be user-defined characters or intelligently selected characters, for example, user created characters or characters having high priorities in an order. Preferably, in the candidate character column the display of the priority associated characters is different from that of the non-priority associated characters, for example one kind arranged in parallel, and the other kind arranged vertically, or both arranged in other methods for differentiation.

Preferably, when the determining unit 208 determines that the number of the one or more priority associated characters reaches the preset value, the displaying unit 204 shows each of the one or more priority associated characters in the preset mode when receiving a first preset operation exerted on the identifier.

When the identifier is used to indicate a number of priority associated characters (it is assumed that the preset value is one), the identifier can be operated, for example, can be clicked so as to display the plurality of priority associated characters corresponding to the identifier. For example, a drop-down menu, a floating window, or a list can be used to show each priority associated character. Accordingly, it can be ensured that the plurality of priority associated characters can be displayed in the prompt input column in abbreviation way, and the user can quickly select a needed character from the plurality of priority associated characters by performing a simple operation to finish input. On one hand convenience for displaying contact names as the prompt input items based on the input character can be ensured, on the other hand it can be ensured that the user can easily select the system default prompt input character to finish input, accordingly the accuracy of the character association is increased.

Preferably, the system 200 further includes an extracting unit 210 configured to extract the character having the highest priority from the priority associated characters when receiving a second preset operation exerted on the identifier when the determining unit 208 determines that the number of the priority associated characters reaches the preset value.

When the identifier is used to indicate a number of priority associated characters (it is assumed that the preset value is one), the identifier can be operated so as to directly extract the character having the high priority from the plurality of priority associated characters, thereby input can be quickly finished.

Preferably, the inquiring unit 202 is further configured to determine whether or not there is one or more priority associated characters. When the inquiring unit 202 determines that there is one or more priority associated characters, the displaying unit 204 displays the one or more priority associated characters in the preset mode. When the inquiring unit 202 determines that there is no priority associated character, the displaying unit 204 displays the non-priority associated characters as the prompt input items.

When no priority associated character is found, only the non-priority characters are displayed, that is, only the system default characters which are associated with the input character are displayed.

Preferably, the determining unit 208 is further configured to determine whether or not the number of the one or more priority associated characters reaches the preset value. Wherein, when the determining unit 208 determines that the number of the one or more priority associated characters does not reach the preset value, the preset mode includes that the identifier generating unit 206 takes each of the one or more priority associated characters as the identifier. When the determining unit 208 determines that the number of the priority associated characters reaches the preset value, the preset mode includes that the identifier generating unit 206 obtains a preset number of characters from the priority associated characters according to the priority of each of the priority associated characters and takes the preset number of characters as the identifier.

For the priority associated characters, the user can preset a threshhold for determining display number, such as two. Thus, under the condition of that there are a great number of found priority associated characters, only two characters the priorities of which are higher than that of the remaining found priority associated characters are displayed in the prompt input column, which can cause a proper number of the system default associated prompt characters to be displayed on the first page of the prompt input column according to user's setting, and can eliminate the condition that the system default prompt input characters cannot be displayed on the first page of the prompt input column as there are a great number of priority associated words, e.g., contact persons.

Preferably, the system further includes a character adding unit 212 configured to store an added character as one priority associated character according to a character adding operation, and/or generate one priority associated character according to an extraction operation exerted on a plurality of characters and store the priority associated character.

The priority associated characters can be set according to the adding operation performed by the user. For example, the contact names of the address book can be set to be the priority associated characters for the input method to execute priority association operation. According to recorded input habits of the user, priority associated characters can also be generated by performing an extracting operation on the input characters.

The present application further includes a terminal which includes the associated prompt input system 200 described in above.

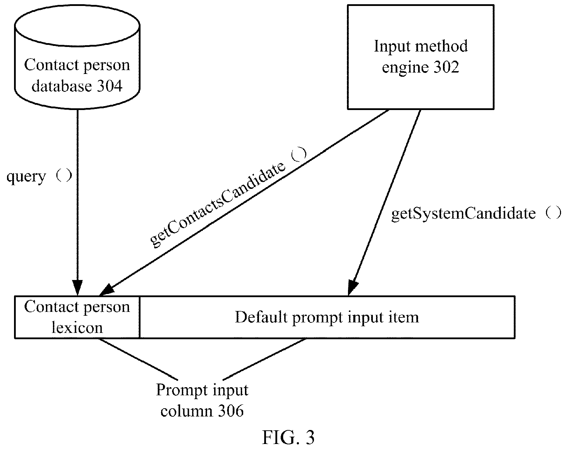

FIG. 3 shows a schematic logic diagram of associated prompt input in accordance with an exemplary embodiment of the present invention.

As shown in FIG. 3, prompt input characters (associated characters) displayed in a prompt input column 306 are consisted of two parts, one part are the default prompt input characters of an input method engine 302, and the other part are user created characters such as contact names. The association priorities of the user created characters are higher than that of the default prompt input characters.

The input method engine 302 provides the obtaining principle of the default prompt input characters. The input method engine 302 returns corresponding prompt input characters according to an input pinyin or a Chinese character before a cursor.

Two ways can be used to inquire and obtain contact names. One way is to establish an independent contact person lexicon in the input method engine 302, and the other way is to inquire a contact person database 304 of a terminal.

If the contact person lexicon is built in the input method engine 302, the input method engine 302 obtains the default prompt input characters and the associated characters of the contact persons through two different interfaces based on the input pinyin or the Chinese character before the cursor. For example, the obtaining interface of default prompt input characters is defined as getSystemCandidate(), and the obtaining interface of the associated characters of contact names can be defined as getContactsCandate(). The final display result in the prompt input column 306 is consisted of two results obtained through the two interfaces and the user interface (UI) is displayed according to the manners described in the embodiments of the present solution.

If the contact person database 304 is directly inquired, the default prompt input characters are firstly obtained from the input method engine 302 based on the input pinyin or the Chinese character before the cursor, and then the pinyin or the Chinese character before the cursor is taken as the inquiring condition, and the contact person database 304 of the terminal is inquired to find results satisfying the inquiring condition. Finally, two results are combined and the user interface is displayed according to the manners described in the embodiments of the present solution.

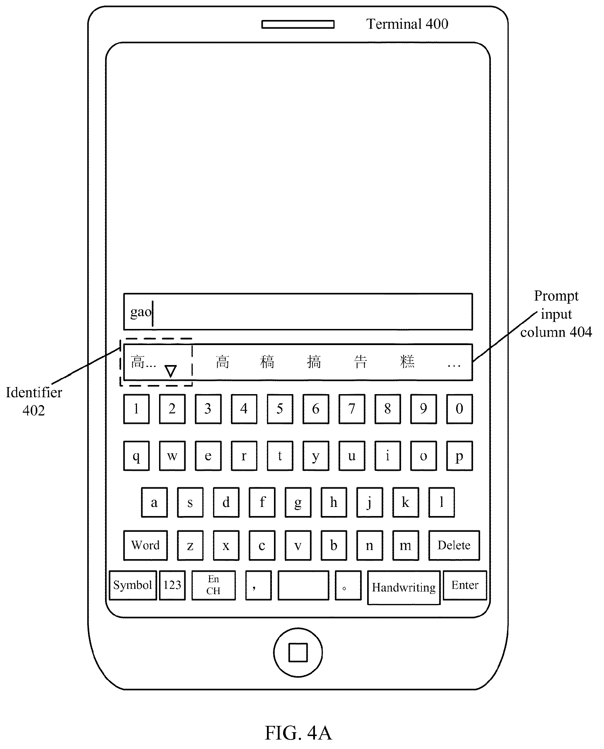

FIGs. 4A-4G show schematic views of associated prompt input in accordance with an exemplary embodiment of the present invention.

As shown in FIG. 4A, the user types a Chinese pinyin "gao" into a terminal 400 (the terminal 400 includes the associated prompt input system 200 shown in FIG. 2), and after query the terminal determines that the default associated prompt characters are Chinese characters 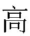 , 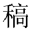 , 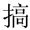 , 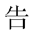 , 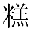 , and so on, and also determines that the contact names are 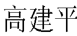 , 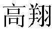 , 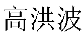 , 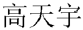 , and so on. As the number of the found contact names is greater than one (it is assumed that the preset value is one), then an identifier 402 is generated according to the contact names. Specifically, the identifier 402 can be generated according to the family name of each contact name. Under this condition, the identifier 402 further includes symbols besides the family name of the contact names, e.g., apostrophe, an inverted triangle, and so on. The apostrophe is used to indicate that there are other characters after the Chinese character " 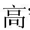 ". The identifier " 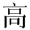 ..." is just an abbreviation expression of a number of characters, the symbol "▼" is used to prompt the user that when the identifier is clicked, a drop-down menu is generated to show a number of contact names. Certainly, the plurality of contact names can be shown in other manners, for example, shown via a floating window, a list, or the like.

It should be noted that the display of the identifier is not limited to the above methods, and the identifier can be displayed in other methods. For example, in the above embodiment, the Chinese character " 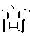 " can be displayed in a large font, and/or the position where the identifier stays can be filled with color to differentiate the identifier from the non-priority associated characters.

To indicate that the identifier 402 is different from the default associated prompt characters, the identifier 402 and the default associated characters are then displayed in the prompt input column 404 of the terminal 400.

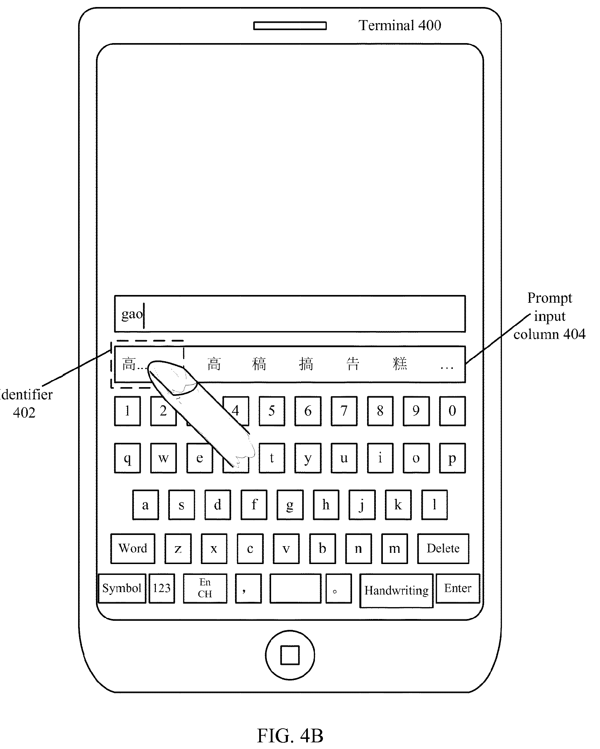

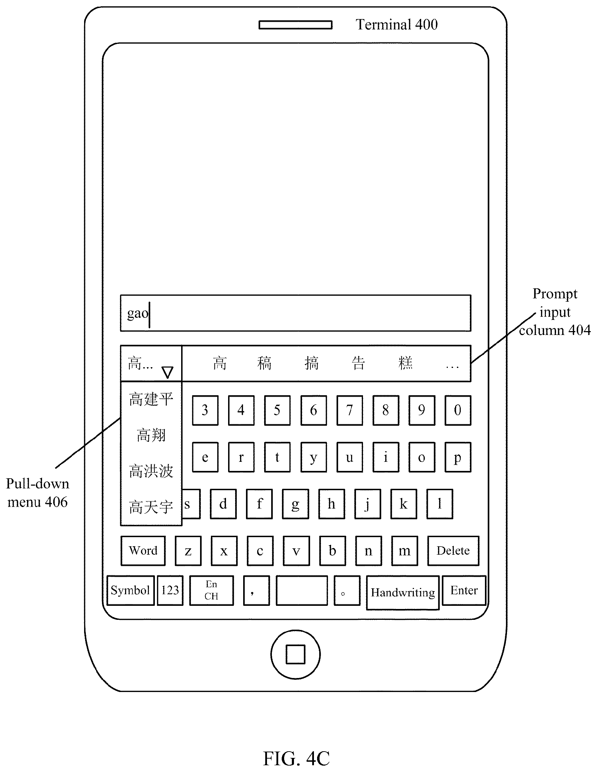

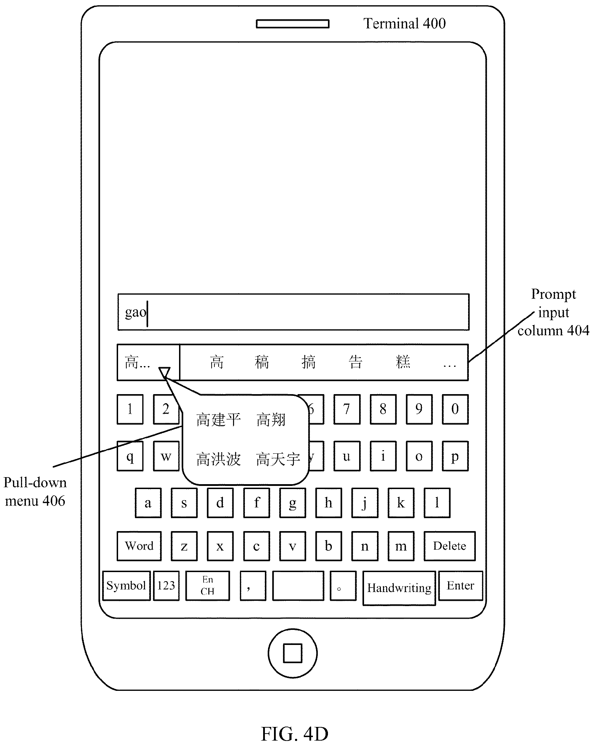

As shown in FIGs. 4B and 4C, the user can perform a click operation (that is, a first preset operation) on the identifier 402 to show the content corresponding to the identifier 402. For example, each contact name corresponding to the identifier 402 can be shown via a drop-down menu 406. Certainly, the show method can include but not limited to the drop-down menu, and a table or other can be used. As shown in FIG. 4D, when the identifier 402 is clicked, each contact name can be shown via text bubbles.

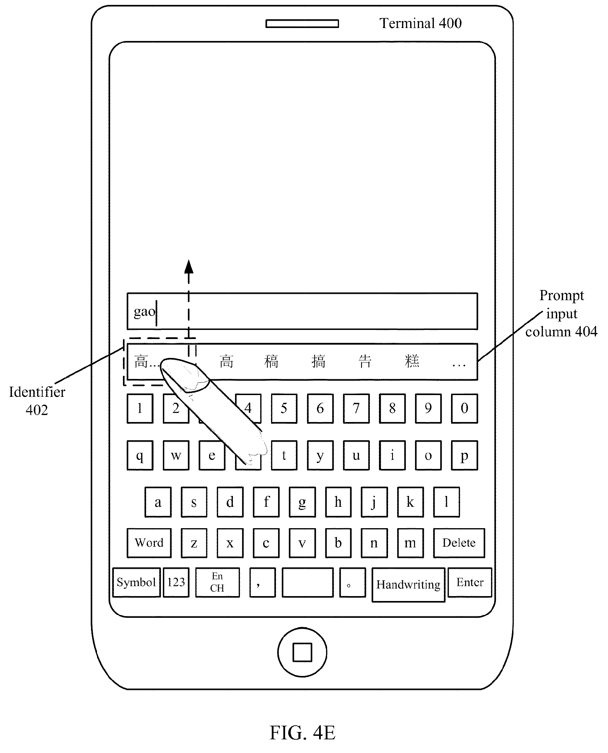

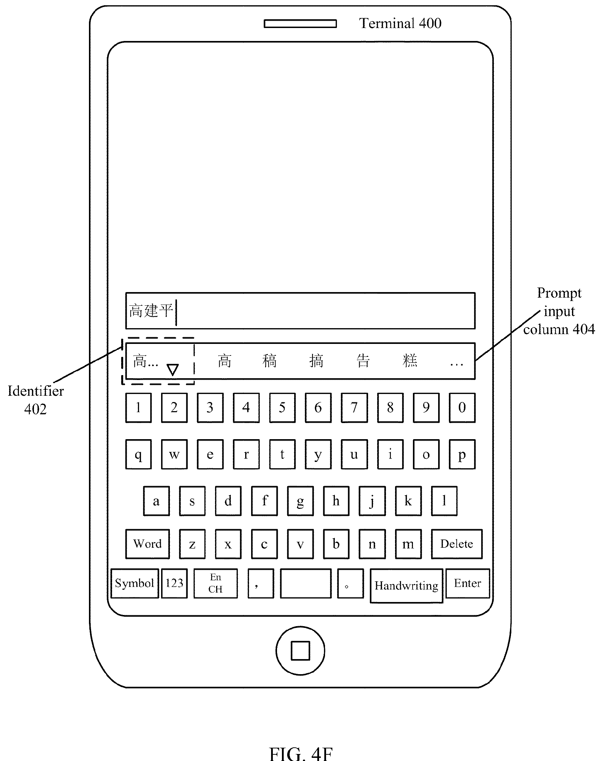

As shown in FIGs. 4E and 4F, the user can perform a pull-up operation on the identifier 404 (that is, a second preset operation) to directly extract the contact name having the highest priority from the plurality of contact names corresponding to the identifier 402. For example, the priority of the contact name " 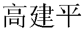 " is highest, and then the contact name " 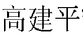 " is directly extracted to finish input. Certainly, the second preset operation can include but not limited to the pull-up operation, and a double-click or pull-down operation can be performed to finish direct input of the character having the highest priority.

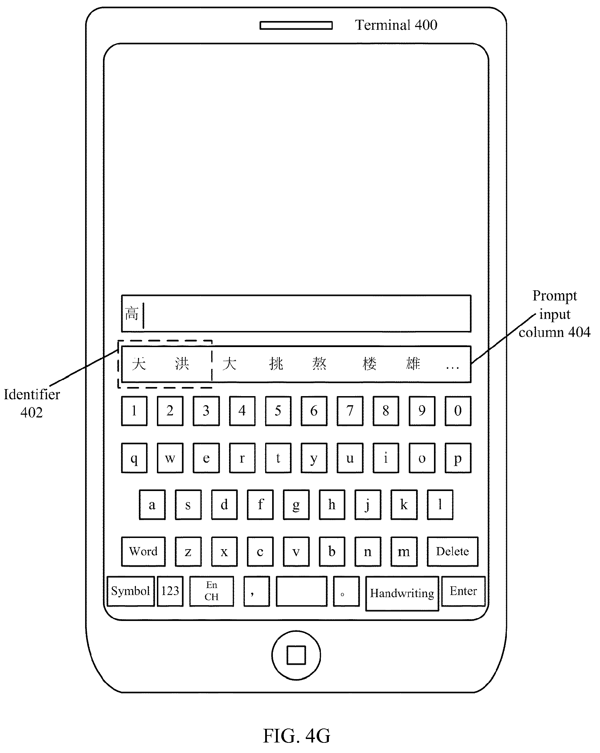

As shown in FIG. 4G, for the priority associated characters, the user can preset a threshhold for the display number, e.g., two. Then after the user types a Chinese character " 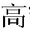 " into the terminal 400, the found priority associated characters can be the characters from the address book of the terminal 400, and can also be the associated characters from the user created lexicon. For example, if five priority associated characters " 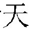 ", " 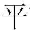 ", " 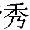 ", " 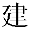 ", and " 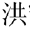 " are found, and the user-defined threshhold is two, that is, at most two priority associated characters can be displayed in the prompt input column 404, and among the five characters, the priorities of the characters " 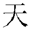 " and " 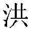 " are in the top two (the priority of one character can be determined according to the frequency of selecting the character by the user), thus according to the above threshhold, only the Chinese character " 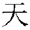 " and " 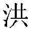 " are displayed as the identifier 402. If only one priority associated character is found, the found character is directly displayed as the identifier 402. If all the found priority characters are displayed in the prompt input column, a part of or all of the five Chinese characters " 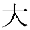 ", " 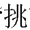 ", " 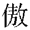 ", " 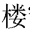 ", and " 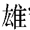 " will be arranged on the second page even on the third page of the prompt input column 404. It can be seen that when an identifier is used to indicate a number of priority associated characters, a proper number of the system default associated prompt characters can be displayed on the first page of the prompt input column according to user's setting, which can eliminate the condition that the system default prompt input characters cannot be displayed on the first page of the prompt input column as there are a great number of priority associated words, e.g., contact persons.

It should be noted that the above input can be finished by pinyin or handwriting.

According to embodiments of the present invention, the present invention further provides a program product stored in a non-volatile machine readable medium to execute an associated prompt input process. The program product includes machine executable instructions executed by the computer system to realize the following steps: inquiring one or more priority associated characters and one or more non-priority associated characters which are associated with an input character when receiving the input character; and displaying the one or more priority associated characters in a preset mode when finding the one or more priority associated characters, and causing the one or more non-priority associated characters and the one or more priority associated characters displayed by the preset mode to be prompt input items of the input character.

According to embodiments of the present invention, the present invention further provides a non-volatile machine readable medium storing a program product for executing an associated prompt input process. The program product includes machine executable instructions executed by the computer system to realize the following steps: inquiring one or more priority associated characters and one or more non-priority associated characters which are associated with an input character when receiving the input character; and displaying the one or more priority associated characters in a preset mode when finding the one or more priority associated characters, and causing the one or more non-priority associated characters and the one or more priority associated characters displayed by the preset mode to be prompt input items of the input character.

According to embodiments of the present invention, the present invention further provides a machine-readable program configured to enable the machine to execute any of the associated prompt input methods described in the above technical solutions.

According to embodiments of the present invention, the present invention further provides a storage medium storing a machine readable program. Wherein, the machine-readable program is configured to enable the machine to execute any of the associated prompt input methods described in the above technical solutions.

The above specifically illustrates the technical solution of the present invention in conjunction with the accompanying drawings. In related art, when associated prompt is generated based on the input character, if a great number of priority associated characters are found, the default prompt input characters cannot be displayed on the first page of the prompt input column. While when one default prompt input character is needed to input, the user needs to perform repeat flipping operations to find the needed character, which can reduce accuracy of character association of the input method. By means of the technical solution of the present application, when the user types a character, not only the created words having high priorities and associated with the input character (e.g., contact names) can be displayed, but also the condition of that the system default prompt input characters cannot be displayed on the first page of the prompt input column as there are a great number of priority associated words (e.g., contact persons) can be eliminated. On one hand convenience for displaying contact names as the prompt input items based on the input character can be ensured, on the other hand it can be ensured that the user can easily select the system default prompt input character to finish input, accordingly the accuracy of the character association is increased.

In the present invention, the term "a number of" or "a plurality of" means two or more than two except definite limitation.

The foregoing descriptions are merely preferred embodiments of the present disclosure, rather than limiting the present disclosure. Various modifications and alterations may be made to the present disclosure for those skilled in the art. Any modification, equivalent substitution, improvement or the like made within the spirit and principle of the present disclosure shall fall into the protection scope of the present disclosure.

## Claims

1. An associated prompt input method, comprising:
step 102, inquiring one or more priority associated characters and one or more non-priority associated characters which are associated with an input character when receiving the input character; and
step 104, displaying the one or more priority associated characters in a preset mode when finding the one or more priority associated characters, and causing the non-priority associated characters and the one or more priority associated characters displayed by the preset mode to be prompt input items of the input character.

2. The associated prompt input method of claim 1, wherein the preset mode comprises generating an identifier according to the one or more priority associated characters, and displaying the identifier.

3. The associated prompt input method of claim 2, wherein step 104 further comprises displaying the identifier and the one or more non-priority associated characters as the prompt input items according to a preset priority.

4. The associated prompt input method of claim 2, wherein step 104 further comprises determining whether or not the number of the one or more priority associated characters reaches a preset value, if the number of the one or more priority associated characters reaches the preset value, the preset mode comprises generating the identifier according to preset attribute information of each of the one or more priority associated characters, and if the number of the one or more priority associated characters does not reach the preset value, the preset mode comprises taking each of the one or more priority associated characters as the identifier.

5. The associated prompt input method of claim 4, wherein the method further comprises showing each of the one or more priority associated characters in the preset mode when receiving a first preset operation exerted on the identifier under the condition of that the number of the one or more priority associated characters reaches the preset value.

6. The associated prompt input method of claim 4, wherein the method further comprises extracting the character having the highest priority from the one or more priority associated characters when receiving a second preset operation exerted on the identifier under the condition of that the number of the one or more priority associated characters reaches the preset value.

7. The associated prompt input method of claim 2, wherein step 104 further comprises determining whether or not the number of the one or more priority associated characters reaches the preset value, if the number of the one or more priority associated characters does not reach the preset value, the preset mode comprises taking each of the one or more priority associated characters as the identifier, and if the number of the priority associated characters reaches the preset value, the preset mode comprises obtaining a preset number of characters from the priority associated characters according to the priority of each of the priority associated characters and taking the preset number of characters as the identifier.

8. The associated prompt input method of any of claims 1-7, wherein the method further comprises storing an added character as one priority associated character according to a character adding operation, or generating one priority associated character according to an extraction operation exerted on a plurality of characters and storing the generated priority associated character.

9. An associated prompt input system, comprising:
an inquiring unit configured to inquire one or more priority associated characters and one or more non-priority associated characters which are associated with an input character when receiving the input character; and
a displaying unit configured to display the one or more priority associated characters in a preset mode when finding the one or more priority associated characters, and cause the non-priority associated characters and the one or more priority associated characters displayed by the preset mode to be prompt input items of the input character.

10. The associated prompt input system of claim 9, wherein the system further comprises an identifier generating unit configured to generate an identifier according to the one or more priority associated characters; the displaying unit is configured to display the identifier.

11. The associated prompt input system of claim 10, wherein the displaying unit is further configured to display the identifier and the one or more non-priority associated characters as the prompt input items according to a preset priority.

12. The associated prompt input system of claim 10, wherein the system further comprises a determining unit configured to determine whether or not the number of the one or more priority associated characters reaches a preset value; if the determining unit determines that the number of the one or more priority associated characters reaches the preset value, the preset mode comprises the identifier generating unit generates the identifier according to preset attribute information of each of the one or more priority associated characters, and if the determining unit determines that the number of the one or more priority associated characters does not reach the preset value, the preset mode comprises the identifier generating unit takes each of the one or more priority associated characters as the identifier.

13. The associated prompt input system of claim 12, wherein the displaying unit shows each of the one or more priority associated characters in the preset mode when receiving a first preset operation exerted on the identifier under the condition of that the determining unit determines that the number of the one or more priority associated characters reaches the preset value.

14. The associated prompt input system of claim 12, wherein the system further comprises an extracting unit configured to extract the character having the highest priority from the one or more priority associated characters when receiving a second preset operation exerted on the identifier under the condition of that the determining unit determines that the number of the one or more priority associated characters reaches the preset value.

15. The associated prompt input system of claim 9, wherein the determining unit is further configured to determine whether or not the number of the one or more priority associated characters reaches the preset value; if the determining unit determines that the number of the one or more priority associated characters does not reach the preset value, the preset mode comprises the identifier generating unit takes each of the one or more priority associated characters as the identifier, and if the determining unit determines that the number of the priority associated characters reaches the preset value, the preset mode comprises the identifier generating unit obtains a preset number of characters from the priority associated characters according to the priority of each of the priority associated characters and takes the preset number of characters as the identifier.

16. The associated prompt input system of any of claims 9-15, wherein the system further comprises a character adding unit configured to store an added character as one priority associated character according to a character adding operation, or generate one priority associated character according to an extraction operation exerted on a plurality of characters and store the generated priority associated character.

17. A terminal comprising the associated prompt system of any of claims 9-16.
